Europäisches Patentamt

European Patent Office

Office européen des brevets

(11) Publication number: **0 058 035**

**A1**

(12) # EUROPEAN PATENT APPLICATION

(21) Application number: **82300516.0**

(22) Date of filing: **01.02.82**

(51) Int. Cl.³: **H 02 M 7/537**
**H 02 M 3/335**

(30) Priority: **04.02.81 JP 15348/81**

(43) Date of publication of application:
**18.08.82 Bulletin 82/33**

(84) Designated Contracting States:
**DE FR GB IT NL SE**

(71) Applicant: **Toshiba Electric Equipment Corporation**
**1-43, 1-chome, Shibaura**
**Minato-ku Tokyo(JP)**

(71) Applicant: **TOKYO SHIBAURA DENKI KABUSHIKI**
**KAISHA**
**72, Horikawa-cho Saiwai-ku**
**Kawasaki-shi Kanagawa-ken 210(JP)**

(72) Inventor: **Aoike, Nanjou**
**931-226, Kuden-cho Totsuka-ku**
**Yokohama-shi(JP)**

(72) Inventor: **Shimizu, Keiichi**
**Toshiba-Shinkoyasu-daiichi-ryo 2-14-10, Shinkoyasu**
**Kanagawa-ku Yokohama-shi(JP)**

(72) Inventor: **Hashima, Akiyoshi**
**3-41-35-101, Mutsuura Kanazawa-ku**
**Yokohama-shi(JP)**

(72) Inventor: **Matsunoshita, Ethuo**
**6-29-11, Higashiterao Tsurumi-ku**
**Yokohama-shi(JP)**

(72) Inventor: **Kimura, Mitsutoshi**
**Yutaka-so 851-5, Kamariya-cho**
**Kanazawa-ku Yokohama-shi(JP)**

(72) Inventor: **Yoshikawa, Yukio**
**C-201, Toshiba-Isogo-dairoku-ryo 2-8-2, Shiomidai**
**Isogo-ku Yokohama-shi(JP)**

(74) Representative: **Freed, Arthur Woolf et al,**
**MARKS & CLERK 57-60 Lincoln's Inn Fields**
**London WC2A 3LS(GB)**

(54) Transistor inverter device.

(57) A transistor inverter device includes a capacitor (12) combined with an input winding (16₁) of a transformer (16) to form a resonance circuit and supplying to a transistor (14) a collector current having a large peak value. An inductor (24) is connected between the base and the emitter of the transistor (14). The inductor (24) generates reverse electromotive force according to a collector current flowing immediately before the transistor (14) is turned off and applied this reverse electromotive force between the base and the emitter of the transistor (14) as reverse bias. The switching operation of the transistor (14) from on-condition to off-condition is accelerated by this reverse bias of the inductor (24).

F I G. 3

EP 0 058 035 A1

- 1 -

Transistor inverter device

The present invention relates to a transistor inverter device and more particularly, a transistor inverter device capable of reducing power loss.

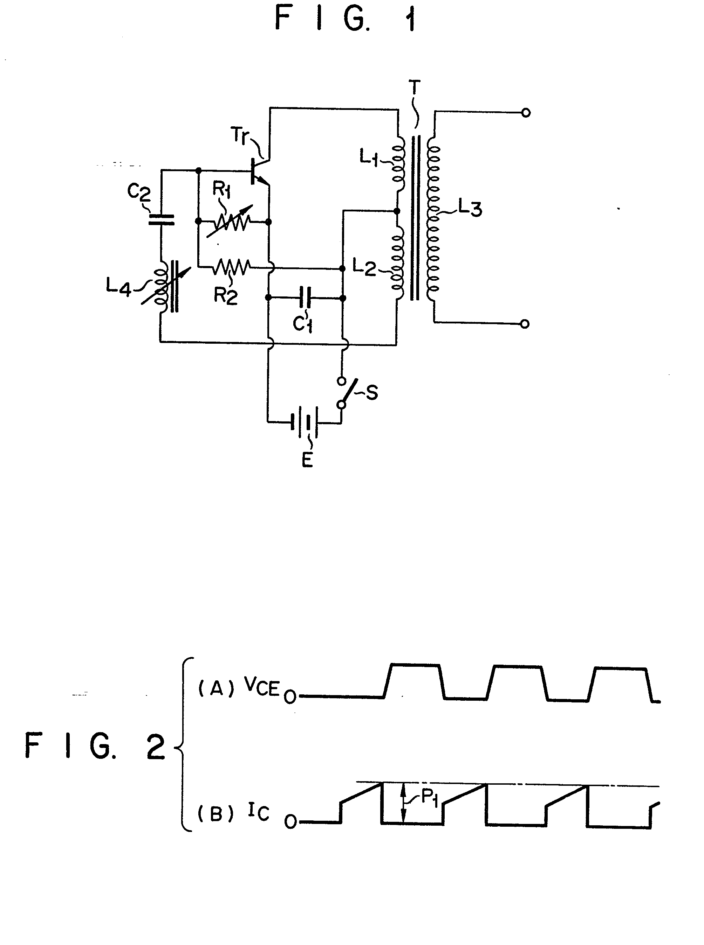

The conventional transistor inverter device for inverting DC voltage supplied from a power source such as battery to AC voltage has such arrangement as shown in Fig. 1. When a switch S is closed, voltage is applied from a DC voltage source E to a collector tuning oscillator circuit which comprises a transistor $T_r$, primary windings $L_1$, $L_2$ of an oscillating transformer T, and a capacitor $C_1$, and AC voltage is generated between both ends of primary windings $L_1$, $L_2$ and secondary winding $L_3$. The frequency of this AC voltage output can be made variable by adjusting the inductance of a variable inductor $L_4$ which is combined with a capacitor $C_2$ to form a resonance circuit. Resistors $R_1$ and $R_2$ serve to give bias to transistor $T_r$.

Fig. 2(A) shows voltage waveform between the collector and the emitter of transistor $T_r$ and Fig. 2(B) the collector current waveform of transistor $T_r$. In the case of circuit shown in Fig. 1, surplus charge flows from the collector to the base of transistor $T_r$ when this transistor $T_r$ is turned on by setting values of capacitor $C_2$ and variable inductor $L_4$ to predetermined ones, and the flow of this surplus charge is broken,

when transistor $T_r$ is turned off, to generate inductive voltage in variable inductor $L_4$. This inductive voltage acts on transistor $T_r$ as reverse bias to accelerate the non-continuity operation of transistor $T_r$. In the case of transistor inverter device having such conventional arrangement as shown in Fig. 1, however, collector current of transistor $T_r$ rises at the same time when transistor $T_r$ is turned on and then increases progressively to form a substantially rectangular wave, as shown in Fig. 2(B). Therefore, collector current having an enough peak value $P_1$ can not be obtained. Surplus charge flowing from the collector to the base of transistor $T_r$ is therefore relatively small and inductive voltage generated in inductor $L_4$ due to the breaking of this current is also small. This makes it difficult to contribute the turn-off of transistor $T_r$.

The object of the present invention is therefore to provide a transistor inverter device capable of reducing power loss by shortening the turn-off time of transistor.

This object can be achieved by a transistor inverter device comprising: a DC power source; a transistor for switching this DC power source; a transformer having at least an input winding, an output winding and a base winding, said input winding being arranged in series with the collector and emitter of transistor and said base winding being arranged between the base and the emitter of transistor; a capacitor arranged to combine with the transistor to form a parallel resonance circuit; and an inductor arranged between the base of transistor and the base winding, said inductor serving to allow a part of collector current flowing immediately before the transistor is turned off to flow therethrough, to generate inductive voltage according to the magnitude of this current allowed to flow therethrough, and to apply this inductive voltage between the base and the emitter of transistor as reverse bias.

As described above, the present invention is so constructed as to generate reverse electromotive force in the inductor according to the magnitude of collector current flowing through the resonance circuit which comprises the transformer and the capacitor when the transistor is changed from on-condition to off-condition, and to apply this electromotive force to the transistor as reverse bias. According to the present invention, therefore, reverse bias voltage of enough magnitude can be obtained and the turn-off time of transistor can be shortened, so that a transistor inverter device of small power loss and high efficiency can be provided.

By way of example and to make the description clearer, reference is made to the accompanying drawings in which:

Fig. 1 is a circuit diagram showing the conventional transistor inverter device;.

Figs. 2(A) and 2(B) show the waveform of voltage appearing between the collector and the emitter of transistor $T_r$ and the waveform of collector current flowing through the transistor, respectively, in the transistor inverter device shown in Fig. 1;

Fig. 3 is a circuit diagram showing an embodiment of transistor inverter device according to the present invention;

Figs. 4A through 4F are waveform diagrams used to explain the operation of circuit shown in Fig. 3;--

Fig. 5 is a circuit diagram showing another embodiment of transistor inverter device according to the present invention.

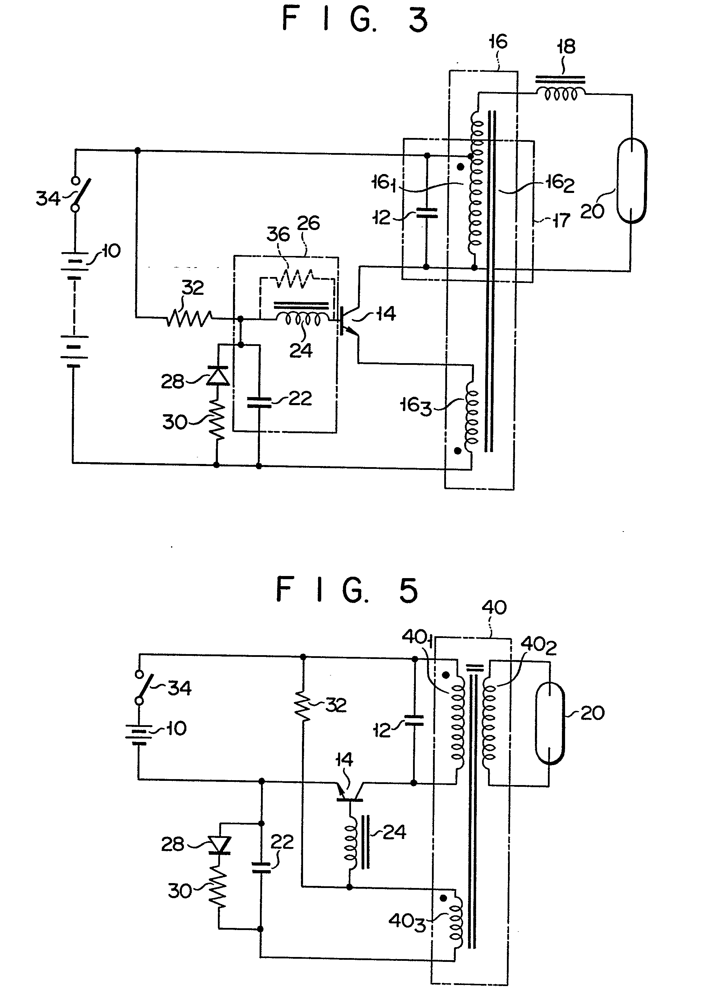

A first embodiment of the present invention will now be described referring to the drawings. Fig. 3 is a circuit diagram showing the first example of transistor inverter device according to the present invention. The positive terminal of a DC power source 10 is connected to one end of a capacitor 12. Battery, rectifying and smoothing power source of AC voltage, non-smoothing power source or the like may be used as DC power source 10. The other end of capacitor 12 is connected to the collector of an NPN type transistor 14. Capacitor 12 is further connected between both ends of an input winding $16_1$ of an autotransformer 16 to form a first resonance circuit 17, which determines the off-time of transistor 14. A discharg lamp 20 is connected, as a load, between both ends of an output winding $16_2$ of autotransformer 16 through a current limiting inductor 18. One end of a base winding $16_3$ of autotransformer 16 is connected to the emitter of transistor 14. The base winding $16_3$ is arranged to magnetically combine with input winding $16_1$. The other end of base winding $16_3$ is connected via a capacitor 22 and an inductor 24. to the base of transistor 14 to apply between the base and the emitter of transistor 14 bias voltage according to the voltage of input winding $16_1$. Capacitor 22 and inductor 24 form a second resonance circuit 26, which determines the on-time of transistor 14. A series circuit of a diode 28 and a resistor 30 is connected parallel to capacitor 22 to apply DC bias voltage between the base and the emitter of transistor 14. During the operation of the inverter, the series circuit can supply current from base winding $16_3$ as base current through inductor 24 to the base of transistor 14, minimizing the power loss. The series circuit may be omitted, because, at the time of starting and during the operation, DC power source 10 can supply base current to the base of transistor 14 through a resistor 32 and inductor 24. The operation of this transistor inverter device is started by closing a switch 34.

When switch 34 is closed, base current is supplied from DC power source 10 to transistor 14 through resistor 32 and inductor 24 to render transistor 14 conductive. As the result, voltage is applied from DC power source 10 to input winding $16_1$ through transistor 14.

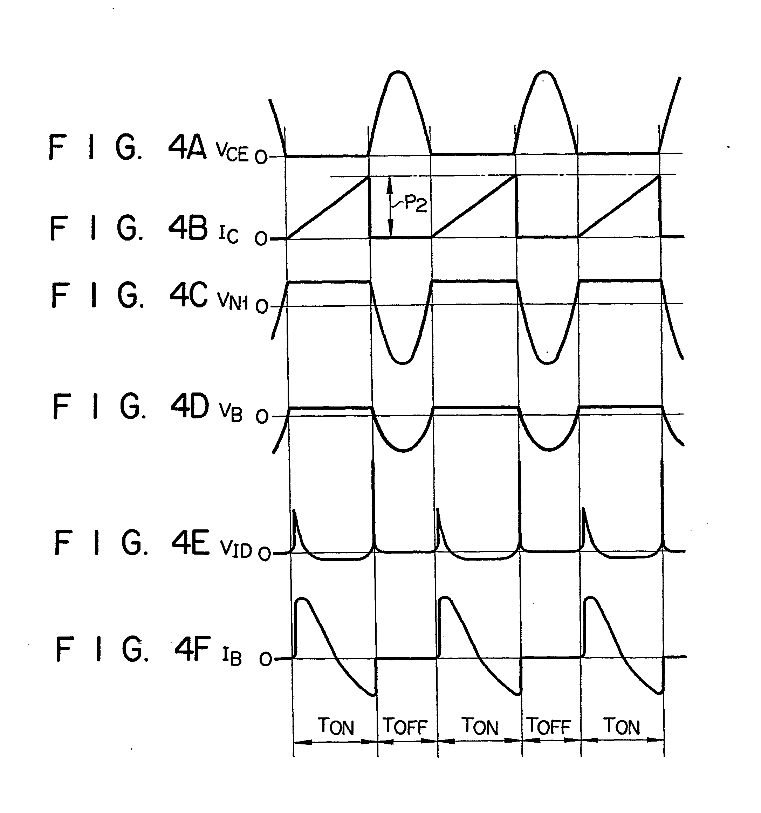

Figs. 4A through 4F show waveforms of voltage and current appearing at main sections at the time when transistor 14 is turned on. $T_{ON}$ represents the time period during which transistor 14 is-under on-condition while $T_{OFF}$ the time period during which transistor 14 is under off-condition.

Referring to Figs. 4A through 4F, the operation of this transistor inverter device will be now described in more detail. When transistor 14 is turned on, voltage $V_{CE}$ appearing between the collector and the emitter thereof is in about zero level, as shown in Fig. 4A. Collector current $I_C$ increases linearly during the time period $T_{ON}$, as shown in Fig. 4B. The waveform of collector current in the conventional inverter device is trapezoidal while that in this embodiment of the present inventionis triangular. This is because the embodiment of the present invention has the parallel resonance circuit 17 which comprises capacitor 12 and transformer 16, while the conventional one shown in Fig. 1 has not such a resonance circuit. In the case where current of same magnitude is supplied to the collector of transistor 14, collector current whose waveform is triangular enables a higher peak value $P_2$ to be obtained as shown in Fig. 4B. At the instant when transistor 14 is changed from off-condition to on-condition, first resonance circuit 17 has extremely large impedance to make collector current of about zero level. Collector current is then supplied through input winding $16_1$, linearly increasing according to the lapse of time. Fig. 4C shows the waveform of voltage $V_{N1}$ appearing through input winding $16_1$ and this waveform is symmetrical to the collector-emitter voltage waveform shown in Fig. 4A. Voltage $V_{N1}$ inducted in input winding $16_1$ when transistor 14 is turned on equals to the voltage supplied from DC power source 10. Fig. 4D shows the waveform of voltage $V_{N1}$ appearing between both ends of base winding $16_3$ and this waveform corresponds to voltage waveform shown in Fig. 4C.

At the instant when transistor 14 is changed from off-condition to on-condition and forward direction bias voltage is applied from base winding $16_3$, this voltage is applied to inductor 24 through capacitor 22 and inductor 24 generates electromotive force $V_{ID}$ equal·to this voltage applied, as shown in Fig. 4E. The scale of voltage shown in Fig. 4E is enlarged for easier understanding as compared with those shown in Figs. 4A, 4C and 4D. Since transistor 14 is biased in forward direction through inductor 24, base. current $I_B$ shown in Fig. 4F is allowed to flow. Capacitor 22 is charged according to the lapse of time and base current $I_B$ decreases accordingly. Even after voltage $V_{ID}$ of inductor 24 reaches zero. level, base current $I_B$ decreases in negative direction due to its resonance with capacitor 22. On the other hand, surplus charge injected into the base region of transistor 14 is drawn toward inductor 24. The magnitude of current due to this surplus charge has a close relation relative to the magnitude of collector current. When surplus charge is present in the base region, collector current still continues to increase as shown in Fig. 4B even if base current $I_B$. flows in negative direction as shown in Fig. 4F. At the instant when no surplus charge becomes present in the base region, base current $I_B$ disappears and transistor 14 is suddenly changed from on-condition to off-condition. Since base current $I_B$ is suddenly stopped, a large reverse electromotive force $V_{ID}$ is generated_in inductor 24 as shown in Fig. 4E. Since this reverse electromotive force is applied, as reverse bias, between the base and the emitter of transistor 14, the switching operation of transistor 14 from on-condition to off-condition is accelerated. The on-time of transistor 14 can be varied by adjusting the inductance of inductor 24 and the capacitance of capacitor 22. Since larger reverse electromotive force can be obtained in inductor 24 as the peak value of collector current flowing at the time when the transistor is under no-condition becomes larger, the embodiment of the present invention enables the switching speed of transistor 14 to be made extremely higher as compared with that attained by the conventional inverter device. Therefore, power loss at the time when transistor 14 is changed from on- to off-condition can be reduced to a larger extent as compared with that in the conventional inverter device. In addition, inrush current into the base of transistor 14 at the time when transistor 14 is turned on can be suppressed by the inductor 24.

When transistor 14 is switched like this from on-condition to off-condition, above-mentioned main sections show such waveforms of current and voltage as shown in Figs. 4A through 4F. When transistor 14 is turned off, collector current becomes of zero level as shown in Fig. 4B. Voltage between the collector and the emitter of transistor 14 is determined by the ratio of impedance of first resonance circuit 16 to that between the collector and the emitter of transistor 14 and becomes as shown in Fig. 4A. The off-time of transistor 14 can be varied be adjusting the inductance of input winding $16_1$ and the capacitance of capacitor 12. When transistor 14 is under off-condition, voltage $V_{ID}$ of inductor 24 connected to the base and base current $I_B$ are in about zero level. Voltage $V_B$ generated through base winding $16_3$ decreases in negative direction as shown in Fig. 4D and then increases in positive direction.

When this voltage $V_B$ reaches forward direction bias voltage between the base and the emitter of transistor 14, transistor 14 is switched from off-condition to on-condition. Voltage generated in base winding $16_3$ thus biases the transistor deeply in forward direction again to accelerate the switching operation of transistor 14 from off-condition to on-condition. The above-described operation is repeated and voltage having high frequency of several tens kHz, for example, and boosted is generated in output winding $16_2$ of autotransformer 16 and supplied to discharg lamp 20.

It should be understood that the present invention is not limited to the above-described embodiment. Although collector-emitter current of transitor 14 flows through base winding $16_3$, the embodiment may be arranged so as not to allow collector-emitter current to flow through base winding $16_3$. NPN type transistor 14 may be replaced by a PNP type transistor. Since the polarity of transistor is reverse in this case, the circuit must be changed accordingly. Capacitor 12 of first resonance circuit 17 is connected between both ends of input winding $16_1$, but it may be connected between both ends of output winding $16_2$. Discharg lamp 20 is used as a load, but other resistance or reactance load may be employed. Autotransformer 16 employed in the embodiment may be replaced by an insulation type transformer 40 having primary and secondary windings as shown in Fig. 5. The arrangement of another embodiment shown in Fig. 5 is fundamentally the same as that shown in Fig. 3 and same parts as those in Fig. 3 are therefore represented by same reference numerals. Capacitor 12 is connected between both ends of a primary winding $40_1$ of insulation type transformer 40 and the discharg lamp 20 is connected between both ends of a secondary winding $40_2$. One end of a base winding $40_3$ is connected to the emitter of transistor 14 through capacitor 22 while the other end thereof to the base of transistor 14 through inductor 24. This second embodiment thus arranged also achieves the same effect as that attained by the first embodiment shown in Fig. 3. Capacitor 22 arranged in series with inductor 24 may be omitted in the present invention and the on-time of transistor is determined by other well known means in this case. No resistor for suppressing parasitic oscillation is arranged in embodiments of the present invention but a parasitic oscillation suppressing resistor 36 may be arranged parallel to inductor 24 as shown by dotted lines in Fig. 3. Resistor 36 may be positioned otherwise in series with capacitor 22, for example.

It should be understood that various changes and modifications can be made without departing the scope and spirit of the present invention.

Claims:

1. A transistor inverter device for turning on and off current flowing from a DC power source through an input winding of a transformer by means of a transistor to output AC voltage from an output winding of said transformer, characterized in that said device comprises:

said transformer having at least said input winding $(16_1)$, output winding $(16_2)$ and a base winding $(16_3)$, said input winding $(16_1)$ being arranged in series with the collector-emitter of said transistor (14) and said base winding $(16_3)$ being arranged between the base and the emitter of said transistor;

a capacitor (12) combined with said transformer (16) to form a parallel resonance circuit; and

an inductor (24) arranged between the base of said transistor (14) and said base winding $(16_3)$, said inductor serving to allow a part of current flowing immediately before said transistor (14) is turned off to flow therethrough, to generate inductive voltage according to the magnitude of this current allowed to flow, and to apply this inductive voltage between the base and the emitter of said transistor (14) as reverse bias.

2. A transistor inverter device according to claim 1, characterized by further including another capacitor (22) connected in series with said inductor (24) to form another resonance circuit and arranged between the base of said transistor (14) and said base winding $(16_3)$.

3. A transistor inverter device according to claim 1 or 2, characterized by further including a resistor (36) arranged parallel to said inductor (24) to suppress parasitic oscillation.

4. A transistor inverter device according to claim 1, 2 or 3, characterized in that said transformer (16) is an autotransformer.

5. A transistor inverter device according to claim 4, characterized in that said autotransformer (16) is combined with said capacitor (12) connected between both ends of said input winding ($16_1$) to form said resonance circuit (17).

6. A transistor inverter device according to claim 1, 2 or 3, characterized in that said transformer is an insulation type transformer (40) having primary and secondary windings ($40_1$) and ($40_2$).

7. A transistor inverter device according to claim 6, characterized in that said insulation type transformer (40) is combined with said capacitor (12) connected between both ends of said primary winding ($40_1$) to form said resonance circuit (17).

8. A transistor inverter device characterized in that said device comprises:

a DC power source (10);

a transistor (14) for switching said DC power source;

a first capacitor (12) arranged between one end of said DC power source (10) and the collector of said transistor (14);

an autotransformer (16) in which said first capacitor (12) is arranged between both ends of an input winding ($16_1$) to form a parallel resonance circuit (17), said input winding ($16_1$) is arranged in series with the collector-emitter of said transistor (14), and a base winding ($16_3$) is arranged between the base and the emitter of said transistor (14);

an inductor (24) having one end thereof connected to the base of said transistor (14), said inductor (24) serving to allow a part of collector current flowing immediately before said transistor (14) is turned off to flow therethrough, to generate inductive voltage according to the magnitude of this current allowed to flow, and to apply this inductive voltage between the base and the emitter of said transistor (14); and

a second capacitor (22) arranged between the other end of said inductor (24) and said base winding ($16_3$).

9.  A transistor inverter device according to claim 8, characterized in that said autotransformer (16) has a load connected between both ends of an output winding ($16_2$).

F I G. 1

F I G. 2

(A) $V_{CE}$

(B) $I_C$

# F I G. 3

# F I G. 5

0058035

F I G. 4A  $V_{CE}$ O

F I G. 4B  $I_C$ O

F I G. 4C  $V_{N1}$ O

F I G. 4D  $V_B$ O

F I G. 4E  $V_{ID}$ O

F I G. 4F  $I_B$ O

$T_{ON}$  $T_{OFF}$  $T_{ON}$  $T_{OFF}$  $T_{ON}$

## European Patent Office

## EUROPEAN SEARCH REPORT

Application number

EP 82 30 0516.0

| Category | Citation of document with indication, where appropriate, of relevant passages | Relevant to claim |
|---|---|---|
| A | Patent Abstracts of Japan Vol. 4, No. 141, 4 October 1980 page 164E28 & JP – A – 55 – 94586 -- | 1,2, 6,7 |
| A | Patent Abstracts of Japan Vol. 4, No. 141, 4 October 1980 page 79E28 & JP – A – 55 – 92577 -- | 1 |
| A | US – A – 3 828 239 (SONY CORP.) * claims 1, 2, 3; fig. 4 * ---- | 1 |

### DOCUMENTS CONSIDERED TO BE RELEVANT

### CLASSIFICATION OF THE APPLICATION (Int. Cl. 3)

H 02 M    7/537
H 02 M    3/335

### TECHNICAL FIELDS SEARCHED (Int.Cl. 3)

H 01 F    31/02
H 02 M    3/335
H 02 M    7/00
H 02 P    13/18
H 05 B    41/29

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 29-04-1982 | FAORO |

EPO Form 1503.1   06.78